# EUROPEAN PATENT APPLICATION

(11) **EP 2 757 361 A1**
(43) Date of publication of application: **23.07.2014**
(21) Application number: 14150943.0
(22) Date of filing: 13.01.2014
(51) Int. Cl.: G01M 5/00, G01M 7/02, G01N 3/32

(54) **A Test Apparatus and a Method of Testing**

(30) Priority: 21.01.2013 GB 201300990
(71) Applicant: Rolls-Royce plc, London SW1E 6AT (GB)
(72) Inventor: Murtas, Pierpaolo, 09097 San Nicolo Arcidano (IT); Neale, John Frank, Portishead, North Somerset BS20 8RE (GB)
(74) Representative: Yeomans, Victoria Jane Anora

(57) **Abstract**

An apparatus for testing a test specimen, the apparatus comprising a first fixture comprising a first mounting filament tensionably secured thereto, a second fixture comprising a second mounting filament tensionably secured thereto, and a vibratory energy source adapted to apply vibrational energy to the test specimen. In use the test specimen is mounted to the first and second mounting filaments so that each of the first and second mounting filaments is aligned with a nodal line on the test specimen.

## Description

### Field of the Invention

The present invention relates to an apparatus for the fatigue testing of components and particularly, but not exclusively, to an apparatus for the fatigue testing of components formed from laminated composite materials.

### Background to the Invention

Developments in gas turbine engines for use as aircraft propulsion units have resulted in the increased use of composite materials, particularly for moving components such as fan blades. The use of composite materials in such applications can provide significant weight and efficiency benefits.

An important factor in the application of composite materials to, for example, fan blades is the need for a comprehensive understanding of the High Cycle Fatigue (HCF) behaviour of the finished fan blade.

Composite materials have more complex HCF failure mechanisms than conventional monolithic materials, such as metals, and hence there is a need to understand this aspect of a composite material's behaviour.

Composite materials have traditionally been designed with conservative static limits and hence fatigue has not been an important failure mechanism. However, as composite design and manufacture become optimised this will change and fatigue failure will increase in importance.

Methods for the fatigue testing of composite test specimens are well known and one such example is that described in US 7,498,728. Such a test method is able to produce a region of high stress in the centre portion of the test specimen away from the points of connection between the test specimen and the test rig.

Such known testing methods have a number of disadvantages. Firstly, it is only possible to test specimens that are both flat and symmetric. However, in reality it is often necessary to test a finished components part, such as a fan blade, which is not flat and is non-symmetric.

Secondly, it is necessary to provide a means of excitation for the entire rig. This is inefficient as a significant proportion of the energy is absorbed by the rig hardware which reduces the effective excitation level of the test specimen.

Thirdly, an excitation source is required at each test specimen mounting point. Each of these excitation sources must operate in phase which increases the complexity and cost of the test apparatus.

Fourthly, it is only possible to test a single vibration mode with a given test rig configuration. It is often the case that, for a given component configuration, higher frequency vibration modes can speed up the testing of the component.

### Statements of Invention

According to a first aspect of the present invention there is provided an apparatus for testing a test specimen, the apparatus comprising:
a first fixture comprising a first mounting filament tensionably secured thereto;
a second fixture comprising a second mounting filament tensionably secured thereto; and
a vibratory energy source adapted to apply vibrational energy to the test specimen,
whereby in use the test specimen is mounted to the first and second mounting filaments so that each of the first and second mounting filaments is aligned with a nodal line on the test specimen.

The test method of the present invention can readily accommodate test specimens having non-symmetrical shapes. It can also accommodate test specimens having non-parallel nodal lines. This means that it is possible to apply the test method to "real world" components such as fan blades for aircraft gas turbine engines.

The ability to test actual finished components means that the test results are directly applicable to in-service conditions, which makes the test method more representative of the operating conditions which are experienced by the component in use. This in turn makes the test method more useful in understanding the in use behaviour of the component(s).

Optionally, in use, each of the first and second mounting filaments passes through at least one hole extending through the test specimen.

This makes it possible to accommodate test specimens that are not flat, such as a curved fan blade. This in turn makes the test method more convenient for a user.

In one arrangement, two holes are positioned on a nodal line of the component with the respective mounting filament passing therethrough. By using two holes for each of the mounting filaments it is straightforward to accommodate test specimens in which the primary nodal lines are not parallel to one another. This makes the test method more adaptable to accommodating test specimens and more convenient for a user.

In other arrangements, more than two holes may be used, for example where a nodal lines does not extend linearly across the test specimen.

Optionally, each of the first and second mounting filaments comprises at least two filaments extending around the test specimen

If the test specimen is flat and symmetric, each of the first and second mounting filaments can extend across each face of the test specimen.

This arrangement does not require any preparation of the test specimen and therefore makes the process of mounting the test specimen in the test apparatus both simple and quick. This in turn makes the method of the invention more convenient for a user.

The use of mounting filaments extending around the test specimen does require that the nodal lines along which the mounting filaments are aligned are themselves straight.

Optionally, the apparatus further comprises means for tensioning the mounting filaments.

It is necessary to tension the mounting filaments to ensure that the test specimen is tightly held in the test apparatus with the mounting filaments aligned with the respective nodal lines throughout the test process.

By tensioning the mounting filaments, they are maintained in alignment with the respective nodal lines for the duration of the test procedure.

Optionally, the first fixture comprises a first clamp; and
the second fixture comprises a second clamp; and
each of the first and second mounting filaments is secured to a respective one of the first and second clamps, the position of each of the first and second clamps in the corresponding first and second fixtures being adjustable to accommodate variation in a size of the test specimen.

Each of the first and second clamps are arranged to secure the corresponding first and second mounting filaments, in each case by securing the opposing ends of the corresponding mounting filament.

For example, in one arrangement the first clamp comprises two attachment portions, each attachment portion securing a respective on of the opposing ends of the first mounting filament. Each of the attachment portions may be positioned independently of one another in order to allow the mounting filament to be aligned with the respective nodal line on the test specimen. In this arrangement, the second clamp is arranged in a similar manner to the first clamp.

The means for tensioning the mounting filaments may be integral with the first and/or the second clamp. Alternatively the means for tensioning the mounting filaments may be separate from the first and second clamps.

Optionally, the source of vibratory energy is a chopped air exciter.

In one arrangement, a chopped air exciter is used to apply a pulsed flow of air to a portion of the test specimen. The chopped air exciter takes the form of a nozzle through which is supplied a pressurised stream of air which is interrupted by a rotating "chopper" disk having an annular arrangement of vanes. By rotating the "chopper" disk at a predetermined rotational speed it is possible to produce a pulsed air stream from the nozzle having a frequency that corresponds to the rotational speed of the "chopper" disk.

The chopped air exciter allows a vibrational excitation force to be applied to the test specimen without the need for physical contact with the test specimen. This makes it simple and straightforward to change the vibrational loading that is applied to the test specimen which in turn makes the apparatus and method easier and more convenient to use.

Optionally, the vibrational energy is applied at an end of the test specimen.

In one arrangement the vibrational energy is applied to an end of the test specimen.

In another arrangement, the vibrational energy is applied to a central portion of the test specimen.

Optionally, the vibrational energy is applied at a nodal line on the test specimen.

Applying the vibrational energy at a nodal line on the specimen makes the method more efficient and thereby requires a smaller energy input which in turn makes the method cheaper and easier to implement.

Optionally, the apparatus further comprises:
one or more third fixtures comprising a third mounting filament tensionably secured thereto;
each of the one or more third fixtures being positioned between the first and second fixtures,
whereby, in use, the test specimen is mounted to each of the one or more third mounting filaments so that each of the one or more third mounting filaments is aligned with a nodal line on the test specimen.

By constraining the test specimen with one or more third fixtures it becomes possible to force the test specimen to vibrate in a predetermined one of the higher modes of vibration. This may be important in order to be able to accurately simulate the loading conditions which are experienced by the test specimen when in service conditions.

According to a second aspect of the present invention there is provided a method of cyclic fatigue testing a test specimen, the test specimen comprising a first fixture comprising a first mounting filament tensionably secured thereto, and a second fixture comprising a second mounting filament tensionably secured thereto, the method comprising the steps of:
analysing the test specimen to identify two primary nodal lines that correspond to a pre-determined vibration mode;
positioning the first and second mounting filaments coincidental with respective ones of the two primary nodal lines;
mounting the test specimen to the first and second mounting filaments;
applying vibratory energy to one of the first and second fixtures; and
monitoring the vibratory response of the test specimen, while recording the loading history of the applied vibratory energy.

The test specimen is mounted to the first and second mounting filaments at respective ones of the two nodal lines which correspond to the vibration mode of interest.

Optionally, the step of:
analysing the test specimen to identify two primary nodal lines that correspond to a pre-determined vibration mode;
comprises the steps of:
scanning the surface of the test specimen using a Scanning Laser Doppler Velocimeter to identify nodal lines on the test specimen; and
selecting two primary nodal lines that correspond to a pre-determined vibration mode.

The use of a Scanning Laser Doppler Velocimeter to scan the surface of the test specimen enables the nodal lines that correspond to the vibration mode of interest to be readily determined.

Optionally, the step of:
applying vibratory energy to one of the first and second fixtures;
comprises the step of:
directing a pulsed flow of a gas against the test specimen, the frequency of the pulsed flow corresponding to a pre-determined excitation frequency.

The frequency of the pulsed flow of gas is derived from the "chopping frequency" of the chopped air exciter and corresponds to the desired excitation frequency to which the test specimen is to be subjected.

Optionally, the test specimen further comprises one or more third fixtures positioned along the test specimen between the first and second fixtures, each of the one or more third fixtures comprising a third mounting filament tensionably secured thereto, and the step of:
analysing the test specimen to identify two primary nodal lines that correspond to a pre-determined vibration mode;
comprises the additional step of:
analysing the test specimen to identify one or more secondary nodal lines that correspond to the pre-determined vibration mode,
the step of:
positioning the first and second mounting filaments coincidental with respective ones of the two primary nodal lines;
comprises the additional step of:
positioning each of the one or more third mounting filaments coincidental with corresponding ones of the one or more secondary nodal lines;
and the step of :
mounting the test specimen to the first and second mounting filaments;
comprises the additional step of:
mounting the test specimen to corresponding ones of the one or more third mounting filaments.

Other aspects of the invention provide devices, methods and systems which include and/or implement some or all of the actions described herein. The illustrative aspects of the invention are designed to solve one or more of the problems herein described and/or one or more other problems not discussed.

### Brief Description of the Drawings

There now follows a description of an embodiment of the invention, by way of nonlimiting example, with reference being made to the accompanying drawings in which:
Figure 1 shows a schematic perspective view of an apparatus according to a first embodiment of the invention;
Figure 2 shows a schematic perspective view of an apparatus according to a second embodiment of the invention; and
Figure 3 shows a schematic perspective view of an apparatus according to a third embodiment of the invention

It is noted that the drawings may not be to scale. The drawings are intended to depict only typical aspects of the invention, and therefore should not be considered as limiting the scope of the invention. In the drawings, like numbering represents like elements between the drawings.

### Detailed Description

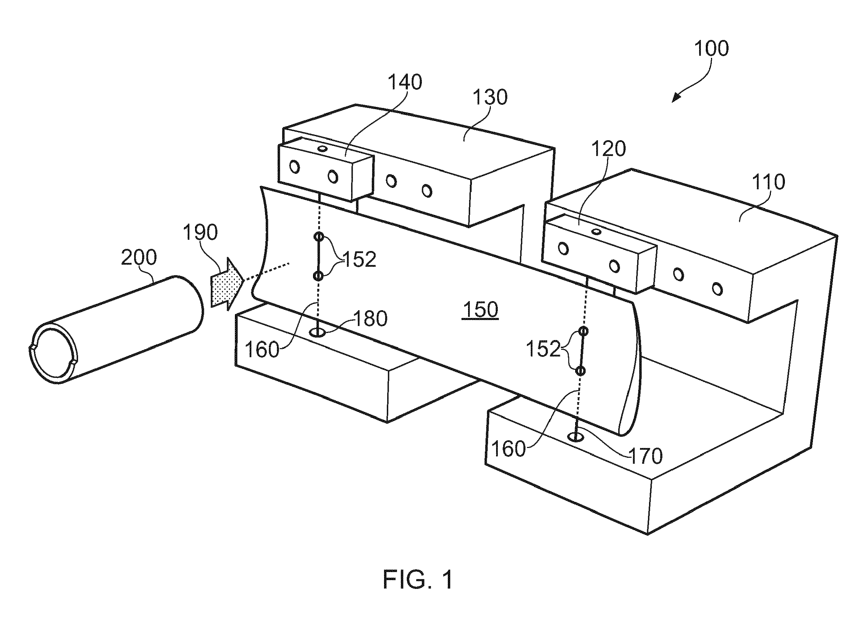

Referring to Figure 1, an apparatus for fatigue testing a test specimen according to a first embodiment of the invention is designated generally by the reference numeral 100.

The apparatus 100 comprises a first fixture 110 comprising a first clamp 120, and a second fixture 130 comprising a second clamp 140. The first and second fixtures 110,130 are typically welded metallic fabrications, but may alternatively be formed from a laminated composite material.

A test specimen 150 which is to be subjected to a fatigue test is first analysed used a Scanning Laser Doppler Velocimeter (not shown) in order to determine the position and orientation of two primary nodal lines 160 corresponding to the mode of vibration to which the test specimen is to be subjected during the test.

In order to mount the test specimen 150 in the apparatus 100 it is necessary to drill two holes 152 along each of the primary nodal lines 160. These holes 152 are spaced across the test specimen 150 along the respective nodal lines 160.

In alternative arrangements, if the test specimen 150 has a particularly unsymmetrical geometry it may be necessary to drill a different number of holes 152 along the respective nodal lines 160.

A first mounting filament 170 and a second mounting filament 180 are positioned at corresponding ones of the nodal lines 160. Each of the first mounting filament 170 and second mounting filament 180 extends through the respective holes 152 in the test specimen 150 and are secured respectively by the first clamp 120 and second clamp 140.

The first and second mounting filaments 170,180 are typically formed from high tensile strength material, examples of such material being high carbon steel wire and carbon fibre filament.

Each of the first and second mounting filaments 170,180, when positioned so as to pass through the corresponding holes 152 in the test specimen 150, lie along respective ones of the corresponding two primary nodal lines 160.

In another arrangement, the nodal lines 160 may be curved or take some other nonlinear orientation. In such an arrangement, there may be more than two holes 152 in the test specimen 150 along each of the nodal lines 160.

Each of the first and second mounting filaments 170,180 are secured at respective first and second clamps 120,140. Each of the first and second clamps 120,140 comprises a tensioning means (not shown) that applies a tensile force to the respective first and second mounting filaments 170,180 in order to keep the mounting filaments 170,180 taut. Keeping the mounting filaments 170,180 taut ensures that the test specimen 150 is securely held in the position required for the fatigue test protocol. In addition, maintaining tension in the mounting filaments 170,180 ensures that a minimal constraint is applied to the test specimen 150, which might absorb excitation energy applied to the test specimen 150 during the test.

The tensioning means may comprise any device that can tension the mounting filament. Such devices are well known in the art and examples may include mechanical clamps, hydraulic cylinders, etc.

In use, a chopped air exciter (not shown) is used to provide a pulsed flow 190 of compressed air to a nozzle 200. The nozzle 200 directs the pulsed flow of air 190 onto the surface 154 of the test specimen 150.

The response of the test specimen 150 to the applied pulsed air flow 190 is monitored by various sensors (not shown). These sensors may include contacting and noncontacting sensors.

In addition to monitoring the excitation applied to the test specimen 150 by the chopped air exciter and monitoring the response of the test specimen 150 to the applied excitation, a visual inspection of the test specimen 150 may also be conducted during the fatigue test.

The response of the test specimen may be monitored by any mechanical, optical or electro-magnetic sensing technique.

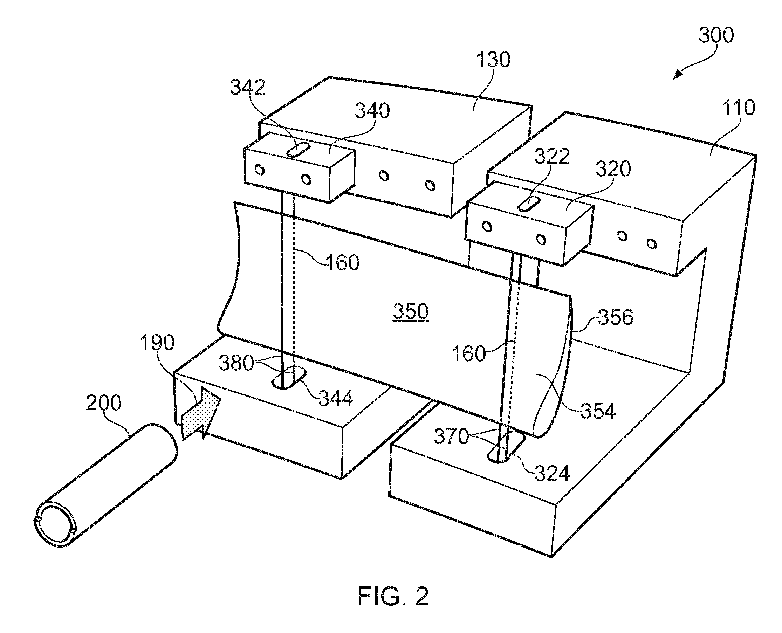

Referring to Figure 2, an apparatus for fatigue testing a test specimen according to a second embodiment of the invention is designated generally by the reference numeral 300. Features of the apparatus 300 which correspond to those of apparatus 100 have been given corresponding reference numerals for ease of reference.

The apparatus 300 comprises a first fixture 110 comprising a first clamp 320, and a second fixture 130 comprising a second clamp 340.

As detailed above, a test specimen 350 is first analysed used a Scanning Laser Doppler Velocimeter (not shown) in order to determine the position and orientation of two primary nodal lines 160 corresponding to the mode of vibration to which the test specimen 350 is to be subjected during the test.

In this embodiment the first mounting filament 370 extends from a first portion 322 of the first clamp 320 at the first fixture 110, to a second portion 324 of the first clamp 320 at the first fixture 110 where it loops around the second portion 324 and passes back to the first portion 322. A tensioning means (not shown) is used at the first portion 322 to maintain the first mounting filament 370 in a taut state.

Similarly, the second mounting filament 380 extends from a first portion 342 of the second clamp 340 at the first fixture 110, to a second portion 344 of the second clamp 340 at the second fixture 130 where it loops around the second portion 344 and passes back to the first portion 342. A tensioning means (not shown) is used at the first portion 342 to maintain the second mounting filament 380 in a taut state.

Each of the first and second mounting filaments 370,380 therefore passes across opposing faces 354,356 of the test specimen 350 to thereby constrain the test specimen 350 therebetween.

In use, the apparatus 300 is used in the same manner as described above for the apparatus 100. In other words, a chopped air exciter is used to provide a pulsed air flow 190 which is directed via a nozzle 200 onto the test specimen 350.

Again, as mentioned above in relation to the first embodiment, the excitation applied to the test specimen 350 by the chopped air exciter is monitored, together with the response of the test specimen 350 to the applied excitation, and visually inspecting the test specimen 350 during the fatigue test.

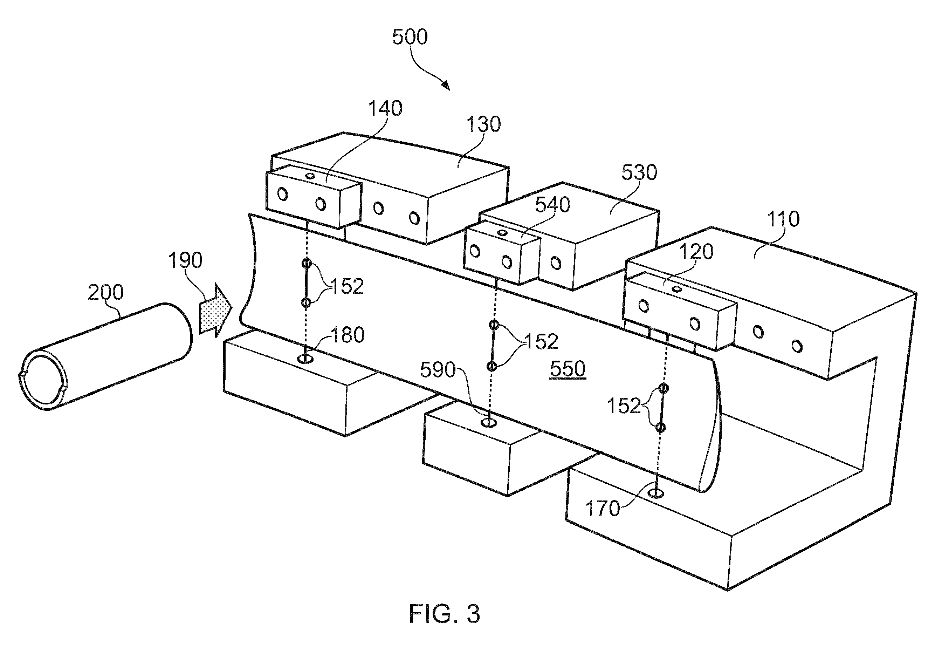

Referring to Figure 3, an apparatus for fatigue testing a test specimen according to a third embodiment of the invention is designated generally by the reference numeral 500. Features of the apparatus 500 which correspond to those of apparatus 100 have been given corresponding reference numerals for ease of reference.

In the third embodiment, the apparatus 500 comprises a first fixture 110 comprising a first clamp 120, a second fixture 130 comprising a second clamp 140, and a third fixture 530 comprising a third clamp 540.

As mentioned above with respect to the first embodiment, a test specimen 550 which is to be subjected to a fatigue test is first analysed used a Scanning Laser Doppler Velocimeter (not shown) in order to determine the position and orientation of three nodal lines 560 corresponding to the mode of vibration to which the test specimen is to be subjected during the test.

In order to mount the test specimen 550 in the apparatus 500 it is necessary to drill two holes 152 along each of the nodal lines 560. These holes 152 are spaced across the test specimen 150 along the respective nodal lines 560.

A first mounting filament 170 and a second mounting filament 180 are positioned at corresponding ones of the nodal lines 560 in each of the first and second fixtures 110,130, and a third mounting filament 590 is positioned at the corresponding nodal line 560 in the third fixture 530.

Each of the first, second and third mounting filaments 170,180,590 extend through the respective holes 152 in the test specimen 550 and are secured respectively by the first, second and third clamps 120,140,540.

Each of the first, second and third mounting filaments 170,180,590, when positioned so as to pass through the corresponding holes 152 in the test specimen 550, lie along respective ones of the corresponding nodal lines 560.

In use, the apparatus 500 is used in the same manner as described above for the apparatus 100. In other words, a chopped air exciter is used to provide a pulsed air flow 190 which is directed via a nozzle 200 onto the test specimen 550.

Again, as mentioned above in relation to the first embodiment, the excitation applied to the test specimen 550 by the chopped air exciter is monitored, together with the response of the test specimen 550 to the applied excitation, and visually inspecting the test specimen 550 during the fatigue test.

The foregoing description of various aspects of the invention has been presented for purposes of illustration and description. It is not intended to be exhaustive or to limit the invention to the precise form disclosed, and obviously, many modifications and variations are possible. Such modifications and variations that may be apparent to a person of skill in the art are included within the scope of the invention as defined by the accompanying claims.

## Claims

1. An apparatus (100) for testing a test specimen (150), the apparatus (100) comprising:
a first fixture (110) comprising a first mounting filament (170) tensionably secured thereto;
a second fixture (130) comprising a second mounting filament (180) tensionably secured thereto; and
a vibratory energy source adapted to apply vibrational energy to the test specimen (150),
whereby in use the test specimen (150)is mounted to the first and second mounting filaments so that each of the first and second mounting filaments (170:180) is aligned with a nodal line on the test specimen (150).

2. The apparatus (100) as claimed in Claim 1, in which, in use, each of the first and second mounting filaments (170:180) passes through at least one hole (152) extending through the test specimen (150).

3. The apparatus (100) as claimed in Claim 1, in which each of the first and second mounting filaments comprises at least two filaments extending around the test specimen (150).

4. The apparatus (100) as claimed in any of Claims 1 to 3, further comprising means for tensioning the mounting filaments.

5. The apparatus (100) as claimed in any one of Claims 1 to 4, wherein
the first fixture (110) comprises a first clamp (120); and
the second fixture (130) comprises a second clamp (140); and
each of the first and second mounting filaments (170:)180) is secured to a respective one of the first and second clamps (120:140), the position of each of the first and second clamps (120:140)in the corresponding first and second fixtures (110:130) being adjustable to accommodate variation in a size of the test specimen (150).

6. The apparatus (100) as claimed in any one of Claims 1 to 5, wherein the source of vibratory energy is a chopped air exciter.

7. The apparatus (100) as claimed in any one of Claims 1 to 6, wherein the vibrational energy is applied at an end of the test specimen (150).

8. The apparatus (100) as claimed in any one of Claims 1 to 7, wherein the vibrational energy is applied at a nodal line (160) on the test specimen (150).

9. The apparatus (100) as claimed in any one of Claims 1 to 8, further comprising:
one or more third fixtures comprising a third mounting filament tensionably secured thereto;
each of the one or more third fixtures being positioned between the first and second fixtures,
whereby, in use, the test specimen (150)is mounted to each of the one or more third mounting filaments so that each of the one or more third mounting filaments is aligned with a nodal line (160) on the test specimen (150).

10. A method of cyclic fatigue testing a test specimen (150), the test specimen (150) comprising a first fixture (110) comprising a first mounting filament (170) tensionably secured thereto, and a second fixture (130) comprising a second mounting filament (180) tensionably secured thereto, the method comprising the steps of:
analysing the test specimen (150)to identify two primary nodal lines that correspond to a pre-determined vibration mode;
positioning the first and second mounting filaments (170:180) coincidental with respective ones of the two primary nodal lines;
mounting the test specimen (150) to the first and second mounting filaments;
applying vibratory energy to one of the first and second fixtures (110:130); and
monitoring the vibratory response of the test specimen (150), while recording the loading history of the applied vibratory energy.

11. The method as claimed in Claim 10, wherein the step of:
analysing the test specimen (150) to identify two primary nodal lines that correspond to a pre-determined vibration mode;
comprises the steps of:
scanning the surface of the test specimen (150) using a Scanning Laser Doppler Velocimeter to identify nodal lines on the test specimen (150); and
selecting two primary nodal lines that correspond to a pre-determined vibration mode.

12. The method as claimed in Claim 10 or Claim 11, wherein the step of:
applying vibratory energy to one of the first and second fixtures (110:130);
comprises the step of:
directing a pulsed flow (190) of a gas against the test specimen (150), the frequency of the pulsed flow (190) corresponding to a pre-determined excitation frequency.

13. The method as claimed in any one of Claims 10 to 12, the test specimen (150) further comprising one or more third fixtures positioned along the test specimen (150) between the first and second fixtures (110:130), each of the one or more third fixtures comprising a third mounting filament tensionably secured thereto, and wherein the step of:
analysing the test specimen (150) to identify two primary nodal lines that correspond to a pre-determined vibration mode;
comprises the additional step of:
analysing the test specimen (150) to identify one or more secondary nodal lines that correspond to the pre-determined vibration mode,
the step of:
positioning the first and second mounting filaments (170:180)coincidental with respective ones of the two primary nodal lines;
comprises the additional step of:
positioning each of the one or more third mounting filaments coincidental with corresponding ones of the one or more secondary nodal lines;
and the step of :
mounting the test specimen to the first and second mounting filaments (170:180);
comprises the additional step of:
mounting the test specimen (150) to corresponding ones of the one or more third mounting filaments.
